# EUROPEAN PATENT APPLICATION

(11) **EP 3 219 483 A1**
(43) Date of publication of application: **20.09.2017**
(21) Application number: 15858644.6
(22) Date of filing: 17.10.2015
(51) Int. Cl.: B32B 7/12, B32B 7/10, B32B 27/12, B29C 69/02, B29D 7/01

(54) **COMPOSITE STRETCHING FILM FOR AGRICULTURE**

(30) Priority: 11.11.2014 CN 201410631836
(71) Applicant: Molecon (Suzhon) Novel Materials Co. Ltd., Suzhou, Jiangsu 215121 (CN)
(72) Inventor: HUANG, Bin, Fremont, California 94539 (US); SUN, Kun, Suzhou, Jiangsu 215121 (CN)
(74) Representative: Franks & Co Limited
(86) International application number: PCT/CN2015/092143
(87) International publication number: WO 2016/074553

(57) **Abstract**

Disclosed in this invention is a composite stretch film for agricultural use, formed by bonding two stretch films together with an adhesive through hot rolling or UV curing such that primary stretch directions thereof cross each other. Compared to the existing single-layer agricultural films having the same thickness, the composite stretch film for agricultural use of the present invention is significantly improved not only in transverse and longitudinal tensile strength but also in transverse and longitudinal tear strength. Therefore, it is able to meet the requirements for use in agriculture with a lesser thickness and hence reduce the use cost. In particular, in case of the composite stretch film being made of a polyester material, it further offers the advantages such as highlight transmittance which changes mildly with time, better thermal insulation properties and better humidity-regulating capabilities. In particular, in case of it being made of a degradable polyester materials, it will further offer profoundly significant benefits in terms of energy saving and environmental protection.

## Description

### Technical Field

The present invention is related to a composite stretch film for agricultural use and pertains to the field of polymer materials.

### Background

Plastic films are currently most used covering materials in terms of area in China's facilitated agriculture because of their advantages including light weight, low price, excellent performance and ease of use and transportation, etc. Depending on the materials from which they are fabricated, agricultural films currently used in China can be grouped into the following three categories: polyvinyl chloride (PVC), polyethylene (PE) and ethylene-vinyl acetate(EVA). In general, single-layer films are 0.1-0.2 mm thick, and double-layer inflated films are approximately 0.2 mm thick. PVC films are becoming obsolete due to their unsatisfactory mechanical properties at high and low temperatures and environmental unfriendliness. Although PE films are comparable to EVA films in terms of light transmittance, their low aging resistance and low thermal insulation properties necessitate repeated anti-fog treatments during the use. EVA films have higher light transmittance, weather resistance, thermal insulation properties, flexibility and droplet repellency over PVC and PE films. However, they suffer from unstable anti-fog performance, low (only 82%) and rapidly decreasing light transmittance and low infrared radiation shielding properties, i.e., low thermal insulation properties. In addition, all these existing agricultural films are associated with the problem of low tear resistance, which is detrimental to their service lives and increases the cost of agricultural production.

Studies and analysis have shown that polyester films (mainly PET films) have good physical properties, chemical properties, durability, etc., as well as capabilities of greatly improving thermal insulation properties, light transmittance, anti-frog (hydrophilic) property, longer life time and light and temperature environments of greenhouses, significantly reducing energy consumption, conserving energy and reducing environmental pollutions. However, existing polyester films also suffer from the low tear resistance issue and hence high use cost and restrictions on their universal application in agricultural facilities.

Further, although uniaxially or biaxially stretched films such as biaxially stretched polypropylene (BOPP) films and biaxially stretched polyester (BOPET) films have found extensive use in the packaging industry because of their high light transmittance resulting from the highly ordered arrangement of their main macromolecular chains during stretching, they cannot be used in protected agriculture, especially in agricultural greenhouses, due to insufficient tear strength.

With the continuous development of protected horticulture and light-transmitting cover material industries in China, it is becoming imperative to develop highly thermal-insulating, highly light-transmitting, dust-resistant, fog-proof, highly tear-resistant, multi-functional, agricultural films with long lifetime that are widely applicable to multi-span greenhouses, mono-span greenhouses, solar greenhouses, etc. Additionally, in order to provide modernized agriculture with novel, practical, safe and environmentally friendly means of production, such films are also required to allow low production costs, energy savings, recycling and reuse.

### Summary

In view of the shortcomings of the prior art discussed above and market needs, it is an object of the present invention to provide a composite stretch film for agricultural use capable of solving the low tear resistance problem in the existing agricultural films, increasing the tear resistance of various films fabricated by stretching processes such as BOPE, BOPP and BOPET films and providing agricultural facilities with an agricultural film having good tear resistance, a long service life and low use cost.

To achieve the above objects, the subject matter of the present invention is as follow:
A composite stretch film for agricultural use, formed by bonding two stretch films together with an adhesive through hot rolling or UV curing such that primary stretch directions thereof cross each other.

In a preferred embodiment, the primary stretch directions of the two stretch films form an angle of 30-150°.

In a more preferred embodiment, the primary stretch directions of the two stretch films form an angle of 60-120°.

In an even more preferred embodiment, the primary stretch directions of the two stretch films form an angle of 90°.

In a preferred embodiment, the stretch films are asymmetrically stretched films comprising uniaxially stretched films and asymmetrically biaxially stretched films.

In a more preferred embodiment, the asymmetrically stretched films are produced using a flat-film method.

In a more preferred embodiment, the ratios of primary stretch ratio to secondary stretch ratio of the asymmetrically stretched films range from (1.2:1) to (4:1).

In an even more preferred embodiment, the ratios of primary stretch ratio to secondary stretch ratio of the asymmetrically stretched films range from (1.4:1) to (3.5:1).

The composite stretch film according to the present invention may be fabricated from the material of one of the various existing highly light-transmitting, highly thermal-insulating stretch films suitable for agricultural use, such as a PE, PP, PO, EVA or polyester material, with a polyester material being preferred, and a PET or modified PET material being particularly preferred. In case of a degradable modified PET material (e.g., the PET or modified PET material disclosed in the patent or patent application US8530612B2, US8722847, CN200980135154.9, CN201210380279.1, US13/968938, US14/244936 or CN201210370366.6) being used, it will further offer profoundly significant benefits in terms of energy saving and environmental protection.

As used herein, the term "asymmetric stretching" refers to a biaxial stretching process performed in such a manner that a stretch ratio in one direction (longitudinal or transverse) is greater than a stretch ratio in the other direction. An extreme scenario of asymmetric stretching is uniaxial stretching, i.e., orientation in only one of the directions and not at all in the other direction. In asymmetric stretching, the direction with the greater stretch ratio is known as a primary stretch direction, while the direction with the lesser stretch ratio is known as a secondary stretch direction. Accordingly, in uniaxial stretching, the direction in which stretching is performed is the primary stretch direction, while that in which stretching is not performed is the secondary stretch direction.

As described herein, the flat film method refers to a process involving: casting pellets from an extruder into a thick sheet via a T-die; quickly cooling the sheet and heating it on hot rollers to a temperature for stretching; and performing synchronous or successive stretching as well as a final finish. Here, the synchronous stretching means stretching in both the longitudinal and transverse directions at the same time, while the successive stretching means stretching in one of the directions followed by stretching in the other direction. The present invention is not limited either to stretch films resulting from synchronous stretching or those from successive stretching or to specific thicknesses of the individual stretch films, and designing of these factors according to specific applications is allowed.

According to the present invention, the adhesive used in the bonding by hot rolling or UV curing is an existing adhesive for film bonding that contains a solvent or not, with a two-component polyurethane adhesive not containing a solvent being preferred.

The present invention provides significant advances over the prior art as follows:
Compared to the existing single-layer agricultural films (e.g., EVA, PE and PO films) having the same thickness, the composite stretch film for agricultural use of the present invention is significantly improved not only in transverse and longitudinal tensile strength but also in transverse and longitudinal tear strength. Therefore, it is able to meet the requirements for use in agriculture with a lesser thickness and hence reduce the use cost. In case of the composite stretch film being made of a polyester material, it further offers the advantages such as highlight transmittance changing mildly with time, capabilities of shortening the crop growth cycle or increasing the yield per unit area, better thermal insulation properties, mechanical properties, UV-shielding properties, dust resistance and a longer service life. In particular, in case of it being made of a degradable polyester material, it will further offer profoundly significant benefits in terms of energy saving and environmental protection. Furthermore, the composite stretch film for agricultural use of the present invention allows easy operations and is readily applicable to mass production.

### Detailed Description

The subject matter of the present invention will be described in further detail below with reference to several embodiment examples so that it can be fully understood.

In the examples, each PET stretch film sample was prepared using a flat-film method including: making a cast sheet with a thickness of about 140-560 mm from a PET resinby a multi-layer extruder (Nanjing Chuangbo Machinery Co., Ltd.); placing the cast sheet on a film stretcher (Bruckner Maschinen bau GmbH), clamping it with clips, heating it to 115°C and stretching it according to a preset program (stretch ratios); and finishing the PET film by rapid cooling in the air.

In the examples, tests related to tensile properties were carried out using a CH-9002A-20 multi-functional tensile tester (Suzhou Baoyuntong Testing Equipment Co., Ltd.). In each test, the sample was cut into a piece with a standard size for tensile testing, i.e., with a width of 1.0-2.6 cm and a length of 15-25 cm. Both ends of the piece was clamped with clips spaced apart from each other by a distance of 100 mm (so that the distance between the ends was also 100 mm), and the test was initiated under the control of an automatic program according to preset conditions, followed by data collection.

In the examples, tests related to tear resistance were carried out using a CH-9002A-20 multi-functional tensile tester (Suzhou Baoyuntong Testing Equipment Co., Ltd.). In each test, an approximately 20-mm-long slit was made in the film sample along a tear direction under test, and both ends of the slit were then clamped with clips. Afterward, the test was initiated under the control of an automatic program, followed by data collection.

### Example 1

An adhesive (e.g., an TS9002A, TS9002B or TS9002C adhesive manufactured by Yantai) was uniformly applied to one side of a PET stretch film, and another PET stretch film was then bonded thereto after the evaporation of a solvent contained in the adhesive such that a primary stretch direction (with a greater stretch ratio) of the second stretch film crossed that of the first stretch film at angles of 90°). The composite film was then subjected to hot rolling performed on a 60-85°C roller (the hot rolling temperature might depend on the adhesive used) and then placed at room temperature until it completely cured.

Table 1 shows a tear resistance comparison among composite films formed from respective PET stretch films with different ratios of primary stretch ratio to secondary stretch ratio using the method according to this Example.

**Table 1**

| Sample | | | | Slit Tear Resistance | |
|---|---|---|---|---|---|
| Primary Stretch ratio | Secondary Stretch ratio | Single Layer Thickness (µm) | Sample Thickness (µm) | Tear Force (kg) | Tear Strength (N/mm) |
| 3.9 | 3.8 | 100 | 100 | 0.07 | 7.18 |
| 3.6 | 3.1 | 150 | 150 | 0.30 | 19.86 |
| 4 | 1 | 75 | 150 | 1.03 | 67.49 |
| 3.5 | 1 | 50 | 100 | 3.00 | 294.00 |
| 2.7 | 1 | 50 | 100 | 3.44 | 337.27 |
| 4 | 2.8 | 70 | 140 | 3.47 | 242.94 |

As can be seen from Table 1, the composite PET stretch films obtained from the inventive method all had significantly increased tear strength over those of the biaxially stretched single-layer PET films having the same thicknesses. Although tear strength increased with sample thickness, compared to the 150-µm-thick biaxially stretched single-layer PET film whose tear strength was only 19.86 N/mm, the tear strength of the inventive 100-µm-thick composite PET film (with a ratio of primary stretch ratio to secondary stretch ratio of 2.7) was up to 337.27 N/mm. That is, a significant increase in tear resistance was obtained. In addition, the higher the asymmetry, the greater the slit tear strength. Ratios of primary stretch ratio to secondary stretch ratio of (1.4:1)-(3.5:1) corresponded to slit tear strength of 240-340 N/mm. However, at a ratio of primary stretch ratio to secondary stretch ratio of 4, tear strength tended to decrease even when the thickness was increased to 150µm.

### Example 2

An adhesive (e.g., an 6062A or 7725B adhesive produced by Henkel) was uniformly applied to one side of a PET stretch film, and another stretch PET film was then bonded thereto such that a primary stretch direction (with a greater stretch ratio) of the second stretch film crossed that of the first stretch film at angles of 90°. The composite film was subjected to hot rolling performed on a 60-85°C roller (the hot rolling temperature might depend on the adhesive used) and then placed at room temperature until it completely cured.

Table 2 shows a tear resistance comparison among composite films formed from respective PET stretch films with different ratios of primary stretch ratio to secondary stretch ratio using the method according to this Example.

**Table 2**

| Sample | | | | Slit Tear Resistance | |
|---|---|---|---|---|---|
| Primary Stretch ratio | Secondary Stretch ratio | Single Layer Thickness (µm) | Sample Thickness (µm) | TearForce (kg) | Tear Strength (N/mm) |
| 3.9 | 3.8 | 100 | 100 | 0.07 | 7.18 |
| 3.6 | 3.1 | 150 | 150 | 0.30 | 19.86 |
| 4 | 1 | 75 | 150 | 1.48 | 96.45 |
| 3.5 | 1 | 50 | 100 | 6.22 | 609.79 |
| 4 | 2 | 50 | 140 | 3.57 | 349.86 |

As can be seen from Table 2, the composite PET stretch films obtained from the inventive method all had significantly increased tear strength over that of the biaxially stretched single-layer PET films having the same thicknesses. Although tear strength increased with sample thickness, compared to the 150-µm-thick biaxially stretched single-layer PET film whose tear strength was only 19.86 N/mm, the tear strength of the inventive 100-µm-thick composite PET stretch film (with a ratio of primary stretch ratio to secondary stretch ratio of 3.5) was up to 609.79 N/mm. That is, a significant increase in tear resistance was obtained. In addition, the higher the asymmetry, the greater the slit tear strength. Ratios of primary stretch ratio to secondary stretch ratio of (2:1)-(3.5:1) corresponded to slit tear strength of 340-610 N/mm. However, at a ratio of primary stretch ratio to secondary stretch ratio of 4, tear strength tended to decrease even when the thickness was increased to 150µm.

It is revealed from a comparison between Tables 1 and 2 that when an adhesive containing a solvent is used in the bonding by hot rolling, the solvent may cause loose molecular orientation in the stretch films and hence lower tear strength.

### Example 3

With reference to Example 2, a tear resistance comparison was made between a composite film resulting from asymmetrically biaxially stretched PET films obtained by simultaneous stretching and a composite film resulting from asymmetrically biaxially stretched PET films obtained by successive stretching.

The test results are presented in Table 3.

**Table 3**

| Sample | | | | Slit Tear Resistance | |
|---|---|---|---|---|---|
| Primary Stretch ratio | Secondary Stretch ratio | Single Layer Thickness (µm) | Sample Thickness (µm) | TearForce (kg) | Tear Strength (N/mm) |
| 4 | 2.8 | 70 (simultaneous stretching) | 140 | 0.78 | 54.81 |
| 4 | 2.8 | 70 (successive stretching) | 140 | 0.61 | 42.95 |

As can be seen from the results in Table 3, the slit tear strength of the composite film made from the simultaneously biaxially stretched films was slightly higher than that of the composite film made from the successively biaxially stretched films, although the difference was not significant.

### Example 4: Tensile Resistance Comparison

Tests for comparing the maximum tensile forces, tensile strengths and elongations at break under transverse and longitudinal stretching conditions of existing 100-µm-thick single-layer agricultural EVA, PE and PO films and a composite film obtained from two 50-µm-thick PET films each having a primary stretch ratio of 3 according to the present invention (the aggregate thickness was also 100µm) were carried out, and the results are shown in detail in Table 4.

**Table 4 Data on Tensile Resistance Comparison**

| No. | Film | Thickness (µm) | Transverse stretching | | | Longitudinal stretching | | |
|---|---|---|---|---|---|---|---|---|
| | | | Max. Tensile Force (N) | Tensile strength (Mpa) | Elongations at Break (%) | Max. Tensile Force (N) | Tensile strength (Mpa) | Elongations at Break (%) |
| 1 | Single-layer EVA Film | 100 | 28.02 | 18.68 | 800.46 | 31.39 | 20.93 | 560.43 |
| 2 | Single-layer PE Film | 100 | 29.02 | 19.34 | 820.72 | 34.98 | 23.32 | 918.75 |
| 3 | Single-layer PO Film | 100 | 41.49 | 27.66 | 859.20 | 36.50 | 24.33 | 668.96 |
| 4 | Inventive Composite Film | 50+50 | 207.11 | 138.07 | 97.60 | 248.69 | 165.79 | 139.52 |

As can be seen from the results shown in Table 4, the composite stretch film for agricultural use according to the present invention was significantly improved in terms of both transverse and longitudinal tensile resistance compared to the existing single-layer agricultural films (e.g., EVA, PE and PO films) having the same thickness.

### Example 5: Tear Resistance Comparison

Tests for comparing the maximum tear forces and tear strengths under transverse and longitudinal stretching conditions of existing 100-µm-thick single-layer agricultural EVA, PE and PO films, an existing 100-µm-thick biaxially stretched single-layer PET film and a composite film obtained from two 50-µm-thick PET films each having a primary stretch ratio of 3 according to the present invention (the aggregate thickness was also 100µm) were carried out, and the results are shown in detail in Table 5.

**Table 5 Data on Tear Resistance Comparison**

| No. | Film | Thickness (µm) | Transverse Stretching | | Longitudinal Stretching | |
|---|---|---|---|---|---|---|
| | | | Tear Force (N) | Tear Strength (N/mm) | Tear Force (N) | Tear Strength (N/mm) |
| 1 | Single-layer EVA Film | 100 | 16.73 | 167.30 | 14.15 | 141.49 |
| 2 | Single-layer PE Film | 100 | 22.49 | 244.97 | 17.35 | 173.50 |
| 3 | Single-layer PO Film | 100 | 19.46 | 194.65 | 14.49 | 144.99 |
| 4 | Biaxially Stretched Single-layer PET Film | 100 | 1.18 | 11.87 | 1.57 | 15.71 |
| 5 | Inventive Composite Film | 100 | 43.25 | 432.55 | 27.01 | 270.14 |

As can be seen from the results shown in Table 5, the composite stretch film for agricultural use according to the present invention was significantly improved in terms of both transverse and longitudinal tear resistance compared to the existing single-layer agricultural films (e.g., EVA, PE and PO films) and biaxially stretched single-layer PET film, having the same thickness.

### Example 6: Light Transmittance Comparison

Test sample: a 100-µm-thick composite PET stretch film (with a ratio of primary stretch ratio to secondary stretch ratio of 3.5) obtained from Example 2.

Control sample: an existing 90-µm-thick single-layer EVA film for use in greenhouses.

A spectrophotometer (a UV-3150 spectrophotometer with a measuring wave length range of 190-3200 nm, Shimadzu Corporation, Japan) was employed to measure test and control samples' the initial light transmittance, light transmittance after use for 3 months and light transmittance after washing with water in the visible light range of 380 to 760 nm, and the results are shown in Table 6.

**Table 6**

| Sample | Initial Light Transmittance (%) | Light Transmittance After Use for 3 Months (%) | Light Transmittance After Washing Once with Water (%) | Light Transmittance After Thorough Washing with Water (%) |
|---|---|---|---|---|
| Control EVA Sample | 83.3 | 75.3 | 79.0 | 83.3 |
| Test PET Sample | 92.0 | 87.8 | 89.4 | 92.0 |

As can be seen from the results shown in Table 6, despite a larger thickness of the inventive composite PET stretch film than that of the existing single-layer EVA film, it still exhibited higher light transmittance and there was a less amount of dust attaching to it during use, given the fact that the main cause for the decreases in light transmittance during the use (within 3 months) was the attachment of dust.

### Example 7: Comparison of Thermal Insulation Properties

A test greenhouse (using a 100-µm-thick composite PET stretch film with a ratio of primary stretch ratio to secondary stretch ratio of 3.5 obtained from Example 2) and a control greenhouse (using an existing 90-µm-thick single-layer EVA film) were constructed, and a hygrothermograph was placed in each of the greenhouses for collecting data on their internal temperatures within different periods of time (according to the phenomenon that daytime is shorter than nighttime in winter, the 24 hour of each day was divided into the following four periods: I) 17:00 in the afternoon to 0:00 in the midnight; II) 0:00 in the midnight to 7:00 in the next morning; III) 7:00 in the morning to 11:00 in the noon; and IV) 11:00 in the noon to 17:00 in the afternoon) under different weather conditions (categorized into the following four types: sunny, cloudy, overcast/foggy and rainy/snowy). Differences between thermal insulation properties of the inventive composite PET stretch film and the existing single-layer EVA film were evaluated by means of statistical analysis (using the JMP 10 software, SAS, the U.S.) of the collected temperature data.

The results of a comparison based on single-factor analysis of internal temperature differences between the test and control greenhouses within the periods under sunny conditions are shown below.

| **Level** | **Quantity** | **Mean** | **Standard Error** | **Lower 95% Confidence Limit** | **Upper95% Confidence Limit** |
|---|---|---|---|---|---|
| I | 329 | 0.3027 | 0.18542 | -0.061 | 0.667 |
| II | 335 | 0.8696 | 0.18375 | 0.509 | 1.230 |
| III | 189 | 3.8265 | 0.24463 | 3.346 | 4.306 |
| IV | 282 | -3.7035 | 0.20027 | -4.096 | -3.311 |

As can be seen from these results, when it was sunny, the temperature in the test greenhouse was higher within Periods I, II and III and lower within Period IV than that in the control greenhouse.

The results of a comparison based on single-factor analysis of internal temperature differences between the test and control greenhouses within the periods when the weather was cloudy are shown below.

| **Level** | **Quantity** | **Mean** | **Standard Error** | **Lower 95% Confidence Limit** | **Upper 95% Confidence Limit** |
|---|---|---|---|---|---|
| I | 231 | 0.5857 | 0.17643 | 0.239 | 0.932 |
| II | 231 | 1.0429 | 0.17643 | 0.697 | 1.389 |
| III | 132 | 2.7621 | 0.23339 | 2.304 | 3.220 |
| IV | 198 | -1.4096 | 0.19056 | -1.784 | -1.036 |

As can be seen from these results, when it was cloudy, the temperature in the test greenhouse was also higher within Periods I, II and III and lower within Period IV than that in the control greenhouse.

The results of a comparison based on single-factor analysis of internal temperature differences between the test and control greenhouses within the periods when the weather was overcast/foggy are shown below.

| **Level** | **Quantity** | **Mean** | **Standard Error** | **Lower 95% Confidence Limit** | **Upper 95% Confidence Limit** |
|---|---|---|---|---|---|
| I | 42 | 0.0619 | 0.34688 | -0.624 | 0.748 |
| II | 42 | 0.7857 | 0.34688 | 0.100 | 1.472 |
| III | 24 | 2.9000 | 0.45887 | 1.993 | 3.807 |
| IV | 36 | -1.6083 | 0.37467 | -2.349 | -0.868 |

As can be seen from these results, when it was overcast/foggy, the temperature in the test greenhouse was also higher within Periods I, II and III and lower within Period IV than that in the control greenhouse.

The results of a comparison based on single-factor analysis of internal temperature differences between the test and control greenhouses within the periods when the weather was rainy/snowy are shown below.

| **Level** | **Quantity** | **Mean** | **Standard Error** | **Lower 95% Confidence Limit** | **Upper 95% Confidence Limit** |
|---|---|---|---|---|---|
| I | 42 | 0.32143 | 0.27982 | -0.232 | 0.8744 |
| II | 42 | 0.84524 | 0.27982 | 0.292 | 1.3982 |
| III | 27 | 2.07778 | 0.34900 | 1.388 | 2.7674 |
| IV | 41 | 0.68049 | 0.28321 | 0.121 | 1.2401 |

As can be seen from these results, when it was rainy/snowy, the temperature in the test greenhouse was higher than that in the control green house within any of the four periods.

The results of a comparison based on single-factor analysis of internal temperature differences between the test and control green houses in the morning period under different weather conditions are shown below.

| **Level** | **Quantity** | **Mean** | **Standard Error** | **Lower 95% Confidence Limit** | **Upper 95% Confidence Limit** |
|---|---|---|---|---|---|
| **Cloudy** | 132 | 2.76212 | 0.28507 | 2.2015 | 3.3227 |
| **Sunny** | 189 | 3.82646 | 0.23824 | 3.3580 | 4.2949 |
| **Overcast/Foggy** | 24 | 2.90000 | 0.66855 | 1.5853 | 4.2147 |
| **Rainy/Snowy** | 27 | 2.07778 | 0.63032 | 0.8383 | 3.3173 |

As can be seen from these results, within the morning period, no matter what the weather was like, the temperature in the test greenhouse was 2-4 °C (3.8 °C on average when the weather was sunny) higher than that in the control greenhouse.

The results of a comparison based on single-factor analysis of internal temperature differences between the test and control greenhouses in the afternoon period under the various weather conditions are shown below.

| **Level** | **Quantity** | **Mean** | **Standard Error** | **Lower 95% Confidence Limit** | **Upper 95% Confidence Limit** |
|---|---|---|---|---|---|
| **Cloudy** | 198 | -1.4096 | 0.36222 | -2.121 | -0.698 |
| **Sunny** | 282 | -3.7035 | 0.30352 | -4.300 | -3.107 |
| **Overcast/Foggy** | 36 | -1.6083 | 0.84949 | -3.277 | 0.060 |
| **Rainy/Snowy** | 41 | 0.6805 | 0.79601 | -0.883 | 2.244 |

As can be seen from these results, within the afternoon period, under any of the weather conditions except for rain/snow, the temperature in the test greenhouse was lower than that in the control greenhouse, and the difference was most significant when it was sunny. On the contrary, when the weather was rainy/snowy, the temperature in the test greenhouse was higher than that in the control greenhouse.

The results of statistically-based comparison between internal temperatures of the test and control greenhouses on sunny afternoons are shown below.

| **Level** | **Quantity** | **Mean** | **Standard Error** | **Lower 95% Confidence Limit** | **Upper 95% Confidence Limit** |
|---|---|---|---|---|---|
| **Control Greenhouse** | 282 | 22.9085 | 0.40262 | 22.118 | 23.699 |
| **Test Greenhouse** | 282 | 19.2050 | 0.40262 | 18.414 | 19.996 |

As can be seen from these results, on sunny afternoons, the temperature in the test greenhouse was on average approximately 3.7 °C lower than that in the control greenhouse. However, since the average temperature in the test greenhouse under such conditions was about 20°C, plant growth therein would not be affected, and required actions to open the greenhouse to dissipate heat therein would be reduced instead.

It is revealed from a summarization of the above test results that, within the 24 hours on each day except for those in the afternoon period, the temperature in the test greenhouse using the inventive composite PET stretch film was always higher than that in the control greenhouse using the existing single-layer EVA film, and the difference was particularly significant in the morning and averaged at 4 °C. In the afternoon period spanning about 4-5 hours, the temperature in the control greenhouse using the existing single-layer EVA film was averagely about 3-4°C, maxminumly up to about a dozen °C, higher than that in the test greenhouse, causing overheating and necessitating opening of the greenhouse for heat dissipation. In contrast, such significant temperature rises did not occur in the test greenhouse. In addition, such phenomena occurred more often under sunny conditions, and did not happen when it was rainy/snowy. However, at any time when the weather was rainy/snowy, the internal temperature of the test greenhouse was always higher than that of the control greenhouse using the existing single-layer EVA film. This further demonstrates that the inventive composite PET stretch film has better thermal insulation properties over the single-layer EVA film and is very suitable for use as an agricultural film.

### Example 8: Comparison of Humidity-Regulating Properties

A test greenhouse (using a 100-µm-thick composite PET stretch film with a ratio of primary stretch ratio to secondary stretch ratio of 3.5 obtained from Example 2) and a control greenhouse (using an existing 90-µm-thick single-layer EVA film) were constructed, and a hygrothermograph was placed in each of the greenhouses for collecting data on their internal humidity under different weather conditions (categorized into the following four types: sunny, cloudy, overcast/foggy and rainy/snowy). Differences between humidity-regulating properties of the inventive composite PET stretch film and the existing single-layer EV film were evaluated by means of statistical analysis (using the JMP 10 software, SAS, the U.S.) of the collected humidity data.

The results of statistically-based internal humidity comparison between the test and control greenhouses under rainy/snowy weather conditions are shown below.

| **Level** | **Quantity** | **Mean** | **Standard Error** | **Lower 95% Confidence Limit** | **Upper 95% Confidence Limit** |
|---|---|---|---|---|---|
| **Control Greenhouse** | 138 | 85.4601 | 2.0694 | 81.386 | 89.534 |
| **Test Greenhouse** | 138 | 82.7435 | 2.0694 | 78.670 | 86.817 |

As can be seen from these results, when the weather is rainy/snowy, there was no significant difference between internal humidity of the test and control greenhouses.

The results of statistically-based internal humidity comparison between the test and control greenhouses under overcast/foggy weather conditions are shown below.

| **Level** | **Quantity** | **Mean** | **Standard Error** | **Lower 95% Confidence Limit** | **Upper 95% Confidence Limit** |
|---|---|---|---|---|---|
| **Control Greenhouse** | 186 | 81.3124 | 2.0311 | 77.318 | 85.306 |
| **Test Greenhouse** | 186 | 78.3457 | 2.0311 | 74.352 | 82.340 |

As can be seen from these results, when the weather is overcast/foggy, there was also no significant difference between internal humidity of the test and control greenhouses.

The results of statistically-based internal humidity comparison between the test and control greenhouses under cloudy weather conditions are shown below.

| **Level** | **Quantity** | **Mean** | **Standard Error** | **Lower 95% Confidence Limit** | **Upper 95% Confidence Limit** |
|---|---|---|---|---|---|
| **Control Greenhouse** | 904 | 80.4306 | 0.89559 | 78.674 | 82.187 |
| **Test Greenhouse** | 904 | 74.6483 | 0.89559 | 72.892 | 76.405 |

As can be seen from these results, when the weather is cloudy, the humidity within the test greenhouse was averagely 6% lower than that within the control greenhouse.

The results of statistically-based internal humidity comparison between the test and control greenhouses under sunny weather conditions are shown below.

| **Level** | **Quantity** | **Mean** | **Standard Error** | **Lower 95% Confidence Limit** | **Upper 95% Confidence Limit** |
|---|---|---|---|---|---|
| **Control Greenhouse** | 995 | 71.0040 | 1.0366 | 68.971 | 73.037 |
| **Test Greenhouse** | 995 | 63.1274 | 1.0366 | 61.095 | 65.60 |

As can be seen from these results, when the weather is sunny, the humidity within the test greenhouse was averagely 8% lower than that within the control greenhouse.

It is revealed from a summarization of the above test results that, under sunny and cloudy conditions, the internal humidity of the test greenhouse was obviously lower than that of the control greenhouse. However, when the weather was overcast, foggy, rainy or snowy, there was no significant difference between internal humidity of the test and control greenhouses. This further demonstrates that the inventive composite PET stretch film has better humidity-regulating properties over the single-layer EVA film and is very suitable for use as an agricultural film.

It is noted here that, the above embodiments are presented merely to describe the subject matter of the present invention in further detail and are not to be construed as limiting the scope of the invention. Non-substantive improvements and modifications made by those skilled in the art in accordance with the above disclosure all fall within the scope of the present invention.

## Claims

1. A composite stretch film for agricultural use, formed by bonding two stretch films together with an adhesive through hot rolling or UV curing such that primary stretch directions thereof cross each other.

2. The composite stretch film for agricultural use of claim 1, wherein the primary stretch directions of the two stretch films form an angle of 30-150°.

3. The composite stretch film for agricultural use of claim 2, wherein the primary stretch directions of the two stretch films form an angle of 60-120°.

4. The composite stretch film for agricultural use of claim 3, wherein the primary stretch directions of the two stretch films form an angle of 90°.

5. The composite stretch film for agricultural use of claim 1, wherein the stretch films are asymmetrically stretched films comprising uniaxially stretched films and asymmetrically biaxially stretched films.

6. The composite stretch film for agricultural use of claim 5, wherein ratios of primary stretch ratio to secondary stretch ratio of the asymmetrically stretched films range from (1.2:1) to (4:1).

7. The composite stretch film for agricultural use of claim 5, wherein the asymmetrically stretched films are formed using a flat-film method.

8. The composite stretch film for agricultural use of claim 1, wherein the stretch films are made of a polyethylene, polypropylene or polyester material.

9. The composite stretch film for agricultural use of claim 8, wherein the stretch films are made of a PET or modified PET material.

10. The composite stretch film for agricultural use of claim 9, wherein the stretch films are made of a degradable modified PET material.
